(19) Europäisches Patentamt
European Patent Office
Office européen des brevets

(11) **EP 4 513 827 A1**

(12) **EUROPEAN PATENT APPLICATION**

(43) Date of publication:
26.02.2025 Bulletin 2025/09

(21) Application number: 24195903.0

(22) Date of filing: 22.08.2024

(51) International Patent Classification (IPC):
*H04L 9/30* (2006.01)

(52) Cooperative Patent Classification (CPC):
H04L 9/3093

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 23.08.2023 KR 20230110569

(71) Applicants:
• Samsung Electronics Co., Ltd
Suwon-si, Gyeonggi-do 16677 (KR)
• UNIST (Ulsan National Institute of Science and Technology)
Ulju-gun, Ulsan 44919 (KR)

(72) Inventors:
• **Lee, Jongeun**
**Uljugun, Ulsan 44919 (KR)**
• **Park, Jaewoo**
**Uljugun, Ulsan 44919 (KR)**
• **Lee, Sugil**
**Uljugun, Ulsan 44919 (KR)**

(74) Representative: **Grünecker Patent- und Rechtsanwälte**
**PartG mbB**
**Leopoldstraße 4**
**80802 München (DE)**

(54) **MEMORY DEVICE AND OPERATING METHOD THEREOF**

(57) A memory device includes a memory cell array, an operator comprising a logic circuit configured to perform an operation comprising a plurality of stages, and a plurality of buffers configured to store first data and second data corresponding to a plurality of operation commands received from a host for each of the plurality of stages, respectively, wherein the operator comprises a butterfly unit configured to perform butterfly operations based on at least one of the first data and the second data.

FIG. 1

**Description**

BACKGROUND

The following description relates to a memory device and an operating method thereof.

Memory devices may be used to store data, as well as to perform calculations using the data. For example, memory devices may be used to multiply polynomials. Multiplying polynomials is part of the algorithm of some homomorphic encryption techniques and lattice-based cryptography. A number-theoretic transform (NTT) operation is used to process the multiplication efficiently. In some examples, acceleration techniques are employed because a large amount of time is incurred to implement the NTT operation through software (SW).

For example, there are two methods for accelerating NTT operations: a graphics processing unit (GPU)-acceleration method and a field programmable gate array (FPGA)-based acceleration method. The GPU-based acceleration method causes high power consumption. Compared to the GPU-based acceleration method, the FPGA-based acceleration method has a similar processing speed but causes relatively low power consumption,. However, the FPGA-based acceleration method may only process a predetermined maximum length of an NTT operation. In addition, most homomorphic encryption algorithms require an operation of high precision considering a security level, but the FPGA-based acceleration method is ineffective for a high-precision operation.

The above description has been possessed or acquired by the inventor(s) in the course of conceiving the present disclosure and is not necessarily an art publicly known before the present application is filed.

SUMMARY

The invention is what is claimed in the independent claims. Preferred embodiments are specified in the dependent claims.

According to embodiments of the present disclosure, a memory device includes a memory cell array, an operator comprising a logic circuit configured to perform an operation comprising a plurality of stages, and a plurality of buffers configured to store first data and second data corresponding to a plurality of operation commands received from a host for each of the plurality of stages, respectively, wherein the operator comprises a butterfly unit configured to perform butterfly operations based on at least one of the first data and the second data.

According to embodiments of the present disclosure, an operating method of a memory device including an operator, the operating method including receiving a plurality of commands from a host, determining a plurality of buffers in which first data and second data corresponding to the plurality of command are stored among the plurality of buffers, respectively, storing the first data and the second data in the determined plurality of buffer, and performing butterfly operations based on at least one of the first data and the second data.

According to embodiments of the present disclosure, a method includes storing, by a memory device, first data in a first buffer and second data in a second buffer, performing, by an operator of the memory device, a butterfly operation based on the first data in the first buffer and the second data in the second buffer, and updating the first data and the second data based on the butterfly operation.

BRIEF DESCRIPTION OF THE DRAWINGS

FIG. 1 illustrates an example of a memory device.
FIG. 2 illustrates an example of a number-theoretic transform (NTT) operation.
FIG. 3A illustrates an example of a memory device.
FIG. 3B illustrates an example of an operator.
FIG. 4 illustrates an example of an in-place update.
FIG. 5 illustrates an example of a pipelining method.
FIG. 6 illustrates an example of an operating method of a memory device.
FIG. 7 illustrates an example of a dynamic random-access memories (DRAM).
FIG. 8 illustrates an example of an operating method of a memory device.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following disclosure relates to systems and processes for memory devices. In particular, some embodiments of the disclosure relate to performing processor-in-memory (PIM) operations in a memory device. Aspects of the disclosure relate to performing a Number-Theoretic Transform (NTT), a Discrete Fourier Transform (DFT) operation. An NTT can serve as a computational kernel in encryption and other applications.

An encryption kernel can be characterized by intense memory usage, and can become a bottleneck in computation due to its long data dependency chains and irregular memory access patterns. These traits make it both computationally intensive and challenging to optimize for performance, particularly in parallel computing environments where memory access patterns significantly affect efficiency. Implementing an NTT operation efficiently is a key consideration in the design and optimization of many computational systems.

Embodiments of the disclosure include a PIM architecture and mapping capable of performing for NTT and related operations. Embodiments enable finding efficient mappings that reduce memory row activation, performing pipelining and in-place update optimization using multiple atom buffers, and economizing memory logic area. For example, some embodiments deliver improved processing speed with less hardware area overhead. Some examples are implemented with no modification of cell arrays, which increases production efficiency. Some embodiments supporting arbitrary polynomial length and modulo values.

The structural or functional descriptions in the present disclosure are intended for the purpose of describing examples of the present disclosure, and the examples may be implemented in various forms. The examples are not meant to be limited. Rather, it is intended that various modifications, equivalents, and alternatives are also covered within the scope of the claims.

In the disclosure, ordinal terms such as "first" and "second" are used to explain various components. However, the components according to embodiments of the present disclosure are not limited to these terms. These terms should be used only to distinguish one component from another component. For example, a "first" component may be referred to as a "second" component, or similarly, and the "second" component may be referred to as the "first" component within the scope of the right according to the concept of the present disclosure.

It should be noted that if it is described that one component is "connected", "coupled", or "joined" to another component, a third component may be "connected", "coupled", and "joined" between the first and second components, although the first component may be directly connected, coupled, or joined to the second component. On the contrary, it should be noted that if it is described that one component is "directly connected", "directly coupled", or "directly joined" to another component, a third component may be absent. Expressions describing a relationship between components, for example, "between", directly between", or "directly neighboring", etc., should be interpreted to be alike.

The singular forms "a", "an", and "the" are intended to include the plural forms as well, unless the context clearly indicates otherwise. It should be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined, all terms, including technical and scientific terms, used herein have the same meaning as commonly understood by one of ordinary skill in the art to which this disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The examples may be implemented as various types of products, such as, for example, a personal computer (PC), a laptop computer, a tablet computer, a smartphone, a television (TV), a smart home appliance, an intelligent vehicle, a kiosk, and a wearable device. Hereinafter, examples will be described in detail with reference to the accompanying drawings. In the drawings, like reference numerals are used for like elements.

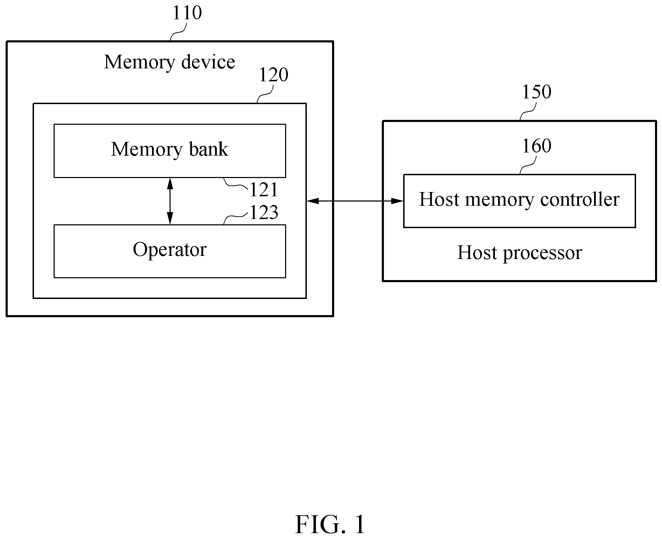

FIG. 1 illustrates an example of a memory device.

Referring to FIG. 1, the present disclosure provides a processing-in-memory (PIM) memory system as shown in FIG. 1. According to embodiments of the present disclosure, the memory system is configured to incorporate an additional computing resource into the memory device 110. The memory system may include the memory device 110 connected to a host processor 150, such as a graphics processing unit (GPU) or a central processing unit (CPU). In some embodiments, the memory device 110 is configured to accelerate polynomial multiplication operations, applicable to post-quantum cryptography (e.g., lattice-based cryptography, homomorphic encryption techniques, etc.), artificial intelligence (AI), and high-performance computing (HPC) applications using the polynomial multiplication operation. The memory system may be applied to servers or portable devices.

In an embodiment, the memory device 110 may include a memory die 120. The host processor 150 may include a host memory controller 160 for interfacing with the memory device 110. In some examples, the host processor 150 may include a host controller for interfacing with the memory device 110. However, the present disclosure is not limited to the foregoing examples. For example, the host memory controller 160 may include a separate die from or the same die as the host processor 150, and may be separated from the host processor 150. Alternatively, the memory device 110 may include a memory controller, and the memory die 120 may be connected to the memory controller via an internal memory bus.

In some embodiments, the host memory controller 160 may be configured to control the execution of instructions from the host processor 150. The instructions may include regular commands (or commands) and PIM commands altogether. For example, the regular commands (e.g., traditional load (read), store (write), and activate (ACT) functions that are not in-memory function commands) may be transmitted by the host memory controller 160 and may be executed in a typical method. For example, the regular commands may include a plurality of commands to store data received through an external bus in the memory die 120 and a plurality of commands to search for and transmit data from the memory die 120 to the host processor 150 through the external bus. As described in detail below, the PIM commands may be added for PIM operations. The PIM commands may include a first operation command and a second operation command, in which the first operation command instructs an operation between pieces of data in the same buffer, and the second operation command instructs an operation between different buffers. Hereinafter, the first operation command may be referred to as C1 and the second operation command may be referred to as C2.

Aspects of the present disclosure relate to the use of in-memory computing (IMC), and the memory system may include a memory bank 121 and an operator 123 in the memory die 120. Comparable conventional systems such as process-near memory (PNM) may position an operator such as an arithmetic logic unit (ALU) outside the memory die. However, in the system according to embodiments of the present disclosure, the operator, shared by the array of memory cells in the memory bank, executes operations directly on data within the memory die, bypassing the need for an external bus.

Several aspects of the present disclosure relate to accelerating a memory boundary operation by incorporating the operator 123 into the memory bank 121 of the memory die 120. For example, operator 123 is integrated within the same semiconductor die as memory bank 121, facilitating efficient data retention.

Memory bank 121 includes an array of memory cells, systematically organized in rows and columns. For example, each row and column including dynamic random-access memory (DRAM) cells, aligns with natural number indices, simplifying data organization. For example, the memory bank 121 may include dynamic random-access memory (DRAM) cells arranged in n rows (or pages) and m columns (here, n and m may be natural numbers). A plurality of bit lines (e.g., B 1 to Bm) may extend in a column direction. A plurality of row enable lines (R1 to Rn) may extend in a row direction of an array and may cross the bit lines. Each of the bit lines may be connected to all cells in a corresponding column (for example, all cells in an ith column of the array may be connected to a bit line Bi). Likewise, each of the row enable lines (e.g., R1 to Rn) may be connected to each memory cell of a corresponding row (for example, a jth row of the array or all cells of a page may be connected to a row enable line Rj). A memory cell of a row of the memory bank 121 may also be referred to as a memory page.

Operator 123 may include performing complex operations, including a number-theoretic transform (NTT) or a fast Fourier transform (FFT). These operations may be particularly efficient for processing the multiplication of two polynomials, a crucial task in post-quantum cryptography. This cryptography includes advanced techniques like lattice-based cryptography and homomorphic encryption methods. The NTT operation may be an FFT transform formula operating in a finite ring. A condition for the ring may be $X^n = -1$, and n may be a degree of a polynomial calculated in NTT. An NTT operation-based polynomial multiplier may include FFT theory and convolution theory and may perform a polynomial calculation while reducing computational complexity. In this case, modular reduction is required for NTT to operate in the ring. Although the operator 123 performing NTT operations is described below, operations performable in the operator 123 are not limited to the NTT operations.

NTT operations are characterized by their irregular memory access patterns and substantial data usage. Therefore, enabling efficient memory access may be significant for improving performance. However, data reuse may be very free in a row of a memory cell array in DRAM, but access to another row or data transmission to another bank may be inefficient. The memory bank 121 may maximize data reuse in a row or a bank by using a plurality of buffers.

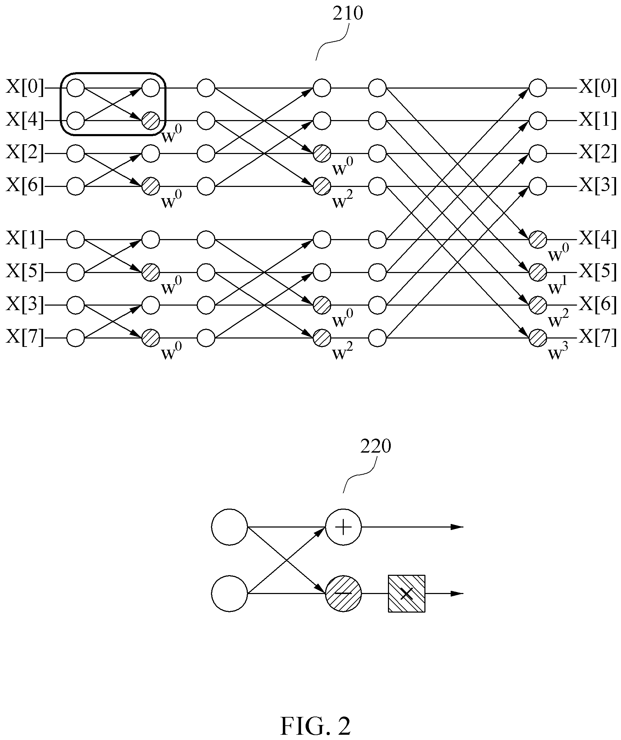

FIG. 2 illustrates an example of an NTT operation.

Referring to FIG. 2, diagram 210 illustrates a dataflow when performing an 8-point NTT operation by using a Cooley-Tukey algorithm.

An NTT operation may be defined as follows. A polynomial A(x) may be closed in Rq(ring), and a member a has a length of n vectors. Accordingly, a vector a = $(a_0, ..., a_{n-1})$ may be a coefficient of the polynomial A(x). NTT(a) may be defined as Equation 1.

Equation 1

$$A_i = \sum_{j=0}^{n-1} a_j w_n^{ij} \bmod q, \text{ for } i = 0, 1, ..., n-1$$

Point-wise multiplication may be applied to the coefficients of identical degree from the results of separate NTT operations on two input polynomials, A and B. A result of the multiplication of the two polynomials A and B may be obtained by performing an INTT operation on a result of the point-wise multiplication. The inverse transform INTT-1 (A) may be defined as Equation 2.

Equation 2

$$a_i = n^{-1} \sum_{j=0}^{n-1} A_j w_n^{-ij} \bmod q, \text{ for } i = 0, 1, ..., n-1$$

The number n used in Equation 2 may be a root of unity of n. In other words, the equation $w^n \equiv 1 \bmod q$ may need to be satisfied. In addition, variables n and w used for the inverse transform INTT may include numbers satisfying the condition of $n \times n\text{-}1 \equiv 1 \bmod q$, $w \times w\text{-}1 \equiv 1 \bmod q$. For example, the NTT may involve an FFT algorithm structure.

An NTT operation may include a plurality of stages. For example, the NTT operation may be performed through the Cooley-Tukey algorithm. The Cooley-Tukey algorithm refers to a technique for efficiently calculating the Fast Fourier Transform (FFT). This algorithm adopts a divide and conquer approach, breaking down a Discrete Fourier Transform (DFT) of composite size into smaller DFTs. It then recursively processes these smaller DFTs, significantly reducing the computational complexity and time, particularly for large data sets. The Cooley-Tukey algorithm's efficiency in rearranging and combining the results of smaller DFTs makes it a pivotal method in FFT computations. To perform a size N of FFT or NTT transform through the Cooley-Tukey algorithm, log N stages are required, and a butterfly operation may be required for each stage. Referring to diagram 220, a butterfly operation of the Cooley-Tukey algorithm may include a modular addition (ModAdd) operation, a modular subtraction (ModSub) operation, and a modular multiplication (ModMult) operation.

However, a method of performing the NTT operation may not be limited to the Cooley-Tukey algorithm. For example, the NTT operation may also be performed through a Gentleman-Sande algorithm, and a butterfly operation of the Gentleman-Sande algorithm may be different from the butterfly operation of the Cooley-Tukey algorithm. The Gentleman-Sande algorithm refers to a technique used for computing the Fast Fourier Transform (FFT). Similar to the Cooley-Tukey algorithm, it employs a divide and conquer strategy but differs in its approach to data reordering. The Gentleman-Sande algorithm is efficient in its handling of data, allowing for in-place computation without the need for additional memory for reordering.

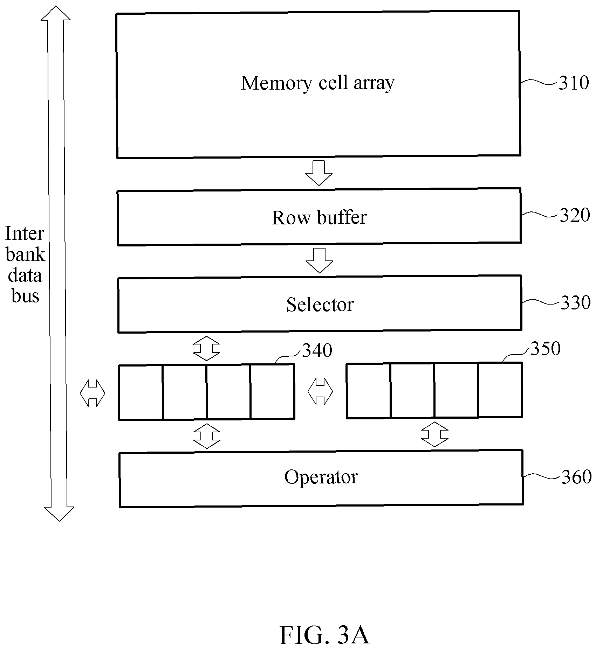

FIG. 3A illustrates an example of a memory device. The descriptions provided with reference to FIGS. 1 and 2 may also apply to FIG. 3A, and any repeated descriptions are omitted.

Referring to FIG. 3A, the memory device may include a memory cell array 310, a row buffer 320, a selector 330, a first atom buffer 340, a second atom buffer 350, and an operator 360. Terms, such as "unit," "module," etc., used hereinafter may refer to a part for processing a function or an operation and may be implemented as hardware, software, or a combination of hardware and software.

When data is read from a specific row in memory cell array 310, the process involves transmitting voltages from the capacitors of the selected memory cells along the bit lines. These voltages, which represent the stored data, are then captured and interpreted by row buffer 320. The row buffer 320 may be connected to a corresponding one of the bit lines. The row buffer 320 may store data read from a current row (or page) until the row is erased by a pre-charge command.

The selector 330 may be a device for selecting data corresponding to a row address from among pieces of data stored in the row buffer 320. For example, the selector 330 may be a multiplexer. However, a selector is not limited to the multiplexer and may include various devices for selecting a certain piece of data from among pieces of data.

The memory device may include a plurality of atom buffers (e.g., the first atom buffer 340 and the second atom buffer 350). An atom buffer may be a buffer having a size smaller than the row buffer 320 and may be used for efficient operations and memory access. In some examples, an atom may be a unit size smaller than a size of a row and may be, for example, 32 bytes.

The first atom buffer 340 may be a buffer included in a typical DRAM memory device. For example, the first atom buffer 340 may be a global sense amplifier (GSA) used for a global input/output (global I/O). The first atom buffer 340 may be referred to as a primary atom buffer to distinguish the first atom buffer 340 from the second atom buffer 350 which is an additional buffer.

The second atom buffer 350 may be referred to as a secondary atom buffer and may be one or more atom buffers that are used additionally other than the first atom buffer 340 (e.g., the GSA).

Although a butterfly operation may be performed in a typical structure having one row buffer per memory bank, memory bank access efficiency may be very low. In NTT operations, which often require interaction between data in different rows, the exclusive use of a row buffer can result in considerably low memory access efficiency. This limitation arises from the row buffer's design, which is more optimized for accessing data within the same row rather than across multiple rows.

According to some embodiments, the memory device may solve the problem described above by adding the second atom buffer 350 having a significantly smaller size than the size of a row buffer. The additional use of the second atom buffer 350 may enable first, an in-place update for overwriting a corresponding buffer with an operation result; and second, parallel operation processing through pipelining.

Firstly, with respect to the in-place update, a buffer for storing output data may be required other than a buffer for storing input data because each piece of data is used twice per stage. However, when scheduling by a stage unit (the stage unit is the same as a butterfly operation unit), data used for each butterfly operation may no longer be used in a corresponding stage, and thus, input data may be deleted. For in-place updates, the buffer's role alternates between storing input and output data, as each data piece is reused in different stages. Specifically, data from a butterfly operation can be rewritten into its original input buffer, enhancing data reuse efficiency. In other words, a result of a butterfly operation may be stored again in a buffer used to input the butterfly operation, that is, by overwriting an input, data may be sufficiently reused.

In a butterfly operation, having separate buffers for each input prevents overwriting issues. If only one buffer is used, the output from one operation might overwrite the input needed for the next, compromising the process and efficiency. In this case, however, an input is already overwritten with the output of the previous operation, and thus the second butterfly operation may not be performed. When the in-place update is not performed, another row activation is required to store an output, and thus, memory access efficiency may become very low.

However, when using the second atom buffer 350, the in-place update of a butterfly operation may be performed in an intra row case (two pieces of input data are in the same row buffer 320) or an inter row case (two pieces of input data are in different row buffers 320) other than an intra atom case (two pieces of input data are in the same atom buffer). For example, utilizing the second atom buffer 350 enables more flexible in-place updates, applicable in various scenarios, whether the data resides within the same row, across different rows, or within the same atom buffer.

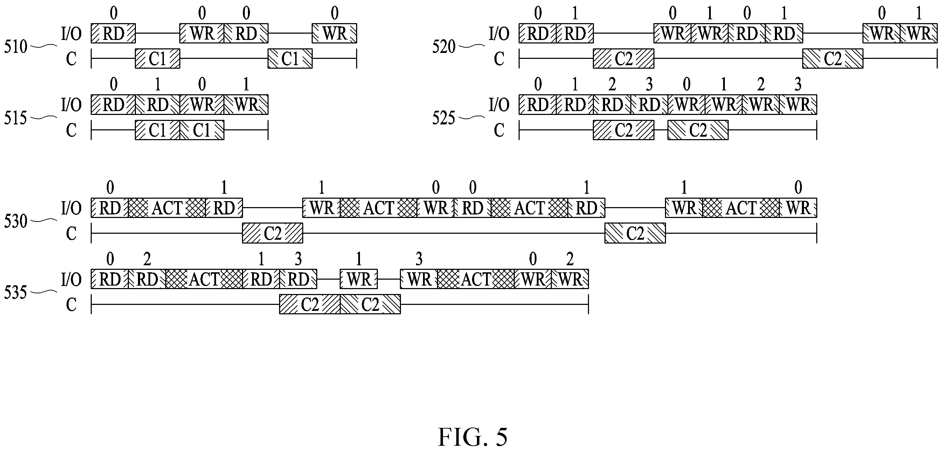

Secondly, the parallel operation processing through pipelining is a technique using a plurality of second atom buffers 350 to process an input unit having a size greater than the size of an atom buffer or a row buffer. For example, the pipelining may shorten an overall execution time by overlapping a time incurred for an operation with a time incurred for memory access. In other words, through pipelining, an operation and memory read/write may be performed simultaneously. For example, in the inter row case, pipelining may further shorten an execution time by reducing the number of row activations. The parallel operation processing method through pipelining is described in detail below with reference to FIG. 5.

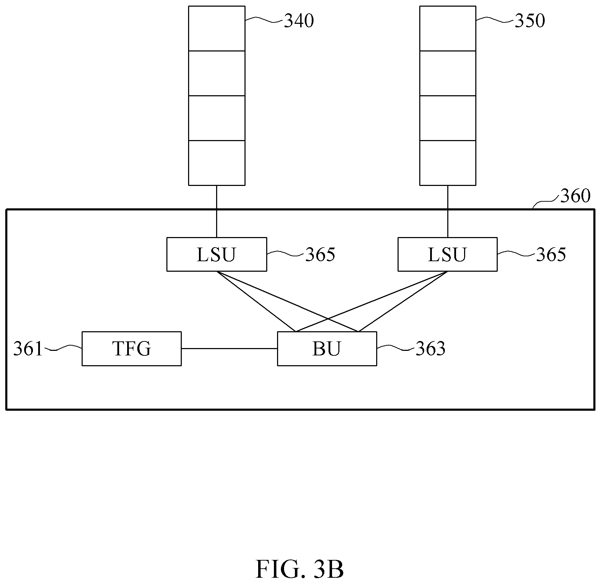

FIG. 3B illustrates an example of an operator.

Referring to FIG. 3B, an operator 360 may include a twiddle factor generator (TFG) 361, a butterfly unit (BU) 363, and a load store unit (LSU) 365. A twiddle factor generator (TFG) refers to a component that generates complex exponential values, known as twiddle factors, used in Fast Fourier Transform (FFT) algorithms. These factors are essential for manipulating and combining input data in various stages of the FFT process.

The TFG 361 may be a device for generating a twiddle factor which is a complex value coefficient of a rotation concept used in an algorithm related to an NTT operation or an FFT operation. The TFG 361 may transmit the twiddle factor to the BU 363 such that a butterfly operation is performed in the BU 363.

The LSU 365 may be a device for managing an interaction between memory and data and may allow the BU 363 to access atom buffers. The atom buffers may include a first atom buffer 340 and a second atom buffer 350.

The BU 363 may be a device for performing the butterfly operation and may include a modular addition operator, a modular subtraction operator, and a modular multiplication operator. However, the components of the BU 363 are not limited to the foregoing examples.

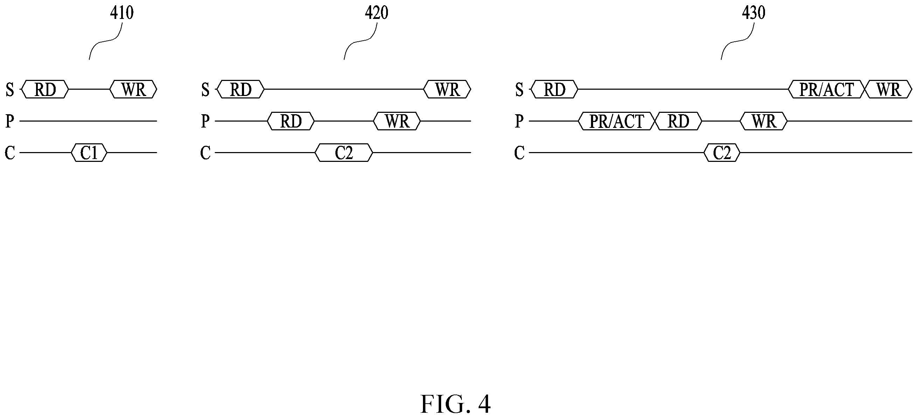

FIG. 4 illustrates an example of an in-place update.

Referring to FIG. 4, diagram 410 illustrates an in-place update operation in an intra atom case (two pieces of input data are in the same atom buffer), diagram 420 illustrates an in-place update operation in an intra row case (two pieces of input data are in the same row buffer), and diagram 430 illustrates an in-place update operation in an inter row case (two pieces of input data are in different row buffers). Here, RD, WR, and PR/ACT respectively denote load

(read), store (write), pre-charge/activate, which are typical DRAM commands. C1 and C2 respectively denote a first operation command and a second operation command, which are PIM commands.

A memory device may divide a whole operation into operations of a dram atom size by dividing NTT of large data into three stages and performing the divided operations. The memory device may store data of a DRAM atom size in an atom buffer using standard DRAM commands, perform operations using C1 or C2 commands, and subsequently update the data in DRAM through in-place updates.

For example, a host processor (e.g., a CPU) may copy data for which an NTT operation is to be performed to a memory area where a PIM function is activated and may transmit read/write and operation commands (e.g., C1 or C2) to the memory area where the PIM function is activated by using NTT parameter information. After completing all commands related to the NTT operation, the host processor may read data for which the NTT operation is completed through a memory read command.

Referring to 410, for example, in the intra atom case, two pieces of data are stored in a second atom buffer S according to an RD command, an operation may be performed in an operator C according to the C1 command, and the second atom buffer S may be overwritten with an operation result according to a WR command.

Referring to 420, for example, in the intra row case, first data is stored in the second atom buffer S according to the RD command, second data is stored in a first atom buffer P, an operation may be performed in the operator C according to the C2 command, the second atom buffer S may be overwritten with an operation result corresponding to the first data according to the WR command, and an operation result corresponding to the second data may be overwritten in the first atom buffer P.

Referring to 430, for example, in the inter row case, firstly, the first data is stored in the second atom buffer S using a read command (RD). Then, a pre-charge/activate command (PR/ACT) changes the target row. Subsequently, the second data is stored in the first atom buffer P, again using an RD command, but in the newly targeted row. The operator C performs an operation using a second operation command (C2). The results of this operation lead to overwriting the first atom buffer P with the result pertaining to the second data, and the second atom buffer S with the result of the first data, both using write commands (WR), after row changes via PR/ACT commands.

FIG. 5 illustrates an example of a pipelining method.

Referring to FIG. 5, diagram 510 illustrates an example of performing two operations without using pipelining in an intra atom case, and diagram 515 illustrates an example of performing two operations through pipelining using two atom buffers in the intra atom case.

Referring to diagram 510, in the intra atom case using one atom buffer (an atom buffer 0), when an operation for a first data pair is completed, an operation for a second data pair may be performed. In some examples, referring to diagram 515, in the intra atom case using two atom buffers (atom buffers 0 and 1), when performing the operation on the first data pair stored in the atom buffer 0, the second data pair may be stored in the atom buffer 1, and when performing the operation on the second data pair, an operation result of the first data pair may be overwritten in the atom buffer 0. Referring to diagrams 510 and 515, it is determinable that the waiting time for receiving data through pipelining decreases.

Diagram 520 illustrates an example of performing two operations without using pipelining in an intra row case, and diagram 525 illustrates an example of performing two operations through pipelining using two atom buffers in the intra row case.

Referring to diagram 520, in the intra row case using two atom buffers (the atom buffers 0 and 1), when the operation for the first data pair is completed, the operation for the second data pair may be performed. In some examples, referring to diagram 525, in the intra row case using four atom buffers (atom buffers 0 to 3), when performing the operation on the first data pair stored in the atom buffers 0 and 1, the second data pair may be stored in the atom buffers 2 and 3, respectively, and when performing the operation on the second data pair, the operation result of the first data pair may be overwritten in the atom buffers 0 and 1, respectively. Referring to diagrams 520 and 525, it is determinable that the waiting time for receiving data through pipelining decreases.

Diagram 530 illustrates an example of performing two operations without using pipelining in an inter row case, and diagram 535 illustrates an example of performing two operations through pipelining using two atom buffers in the inter row case.

Referring to diagram 530, in the inter row case using two atom buffers (the atom buffers 0 and 1), when the operation for the first data pair is completed, the operation for the second data pair may be performed. In some examples, referring to diagram 535, in the inter row case using four atom buffers (the atom buffers 0 to 3), first data of the first data pair may be stored in the atom buffer 0, first data of the second data pair may be stored in the atom buffer 2. Then, a target row may be changed, and in the changed row, second data of the first data pair may be stored in the atom buffer 1, and second data of the second data pair may be stored in the atom buffer 3. When storing the second data of the second data pair in the atom buffer 3, the operation for the first data pair may be performed. When the operation for the second data pair is performed, an operation result of the second data of the first data pair may be stored in the atom buffer 1. Then, an operation result of the second data of the second data pair may be stored in the atom buffer 3. After changing the target row, the operation results are stored in specific atom buffers. For example, the result of the first data from the first data pair is stored in atom buffer 0, and the result of the first data from the second data pair is placed in atom buffer 2. This arrangement may facilitate orderly data storage post-operation.

Referring to diagrams 530 and 535, a total execution time may decrease by overlapping a time incurred for an operation with a time incurred for memory access through pipelining. Additionally, execution time can be further reduced by decreasing the number of row activations. For instance, execution involving four row activations, as illustrated in diagram 530, can be optimized to just two activations, as shown in diagram 535, thereby enhancing overall efficiency.

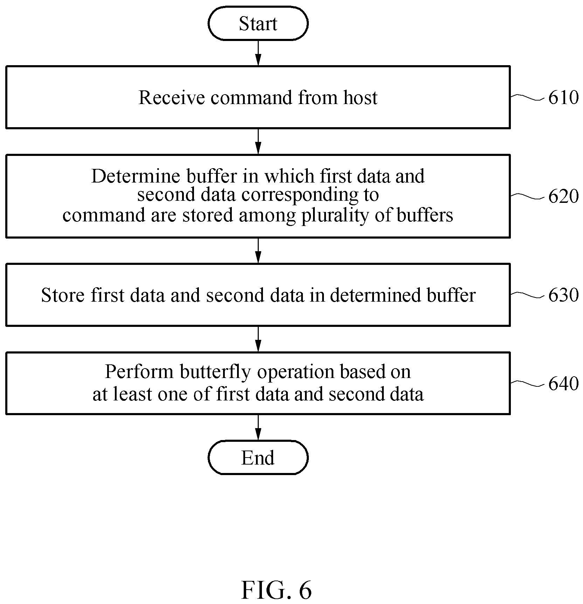

FIG. 6 illustrates an example of an operating method of a memory device.

For ease of description, it will be described that operations 610 to 640 are performed by using the memory device 110 illustrated in FIG. 1. However, operations 610 to 640 may be performed by another suitable electronic device in any suitable system.

Furthermore, the operations of FIG. 6 may be performed in the shown order and manner. However, the order of some operations may be changed, or some operations may be omitted, without departing from the scope of the shown example. The operations illustrated in FIG. 6 may be performed in parallel or simultaneously.

In operation 610, the memory device 110 may receive a command from a host. The memory device 110 may receive a first operation command and a second operation command, in which the first operation command instructs an operation between pieces of data in the same buffer, and the second operation command instructs an operation between different buffers. For example, the first command may instruct the device to add two numbers within the same buffer, and the second may instruct a multiplication between data in separate buffers.

In operation 620, the memory device 110 may determine a buffer in which first data and second data corresponding to the command are stored among a plurality of buffers. For example, based on the command, the memory device 110 may choose a buffer that currently holds the required data for the upcoming operation.

In operation 630, the memory device 110 may store the first data and the second data in the determined buffer. In the memory device 110, when an operator performs an operation including a plurality of stages, the plurality of buffers may store at least one of input data and output data of the operation including the plurality of stages. For example, if the operation is a multi-stage computation, the first data may be an initial value, and the second data may be an intermediate result from a previous stage.

In operation 640, the memory device 110 may perform a butterfly operation based on at least one of the first data and the second data. For example, the memory device 110 may combine these data in a specific way, like in an FFT, to efficiently process the first data and the second data.

In the memory device 110, when an operation of a corresponding stage is completed, a buffer storing the first data may update the first data to a result of a butterfly operation corresponding to the first data, and a buffer storing the second data may update the second data to a result of a butterfly operation corresponding to the second data.

Upon receiving the second operation command, memory device 110 stores the first data in a dedicated first buffer and the second data in a separate second buffer. After completing the stage-specific operation, the first buffer updates its contents with the result from the butterfly operation related to the first data. Similarly, the second buffer updates with the result corresponding to the second data. This approach ensures each data set is independently processed and updated within its respective buffer.

When the memory device 110 receives the first operation command from the host, the first data and the second data may be stored in the second buffer. When the operation of the corresponding stage is completed, the first buffer may update the first data to the result of the butterfly operation corresponding to the first data, and the second buffer may update the second data to the result of the butterfly operation corresponding to the second data.

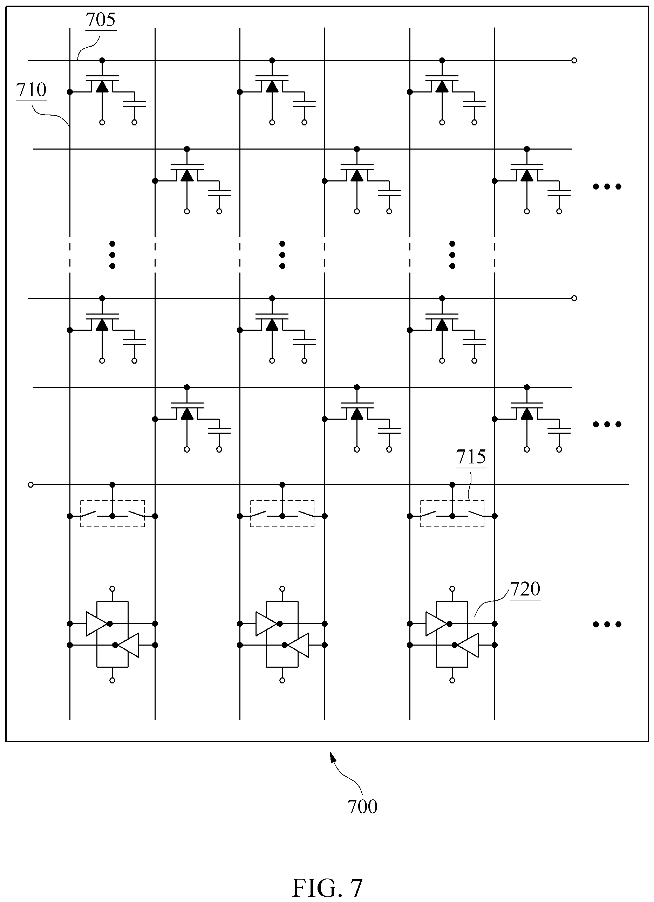

FIG. 7 illustrates an example of a dynamic random-access memories (DRAM).

Referring to FIG. 7, word-line 705 specifically targets a row of memory cells, enabling the reading or writing of data, including executing PIM operations like NTT/FFT. For example, when a memory read operation is initiated, word-line 705 activates the corresponding row, allowing data stored in that row's cells to become accessible. This activation determines which specific row of cells is engaged for the subsequent data transfer. For example, during a memory read operation, word-line 705 activates a row for data access. This operation may be modified for efficient PIM processing, such as NTT/FFT operations.

Bit-line 710 is directly connected to the memory cells along the columns. Bit-line 710 is responsible for the actual data transfer to and from these cells. During a memory read operation, for instance, bit-line 710 carries the minute electrical charges from the activated memory cells to the sense amplifiers, effectively conveying the stored data. Conversely, during a write operation, bit-line 710 transmits the data to be stored into the memory cells. For example, bit-line 710 may be responsible for transferring data crucial for PIM operations such as performing butterfly operations on data stored in buffers. For example, during a read operation, bit-line 710 carries electrical charges from memory cells to sense amplifiers, which is fundamental in the process of executing and updating data based on butterfly operations.

Bit-line precharge circuitry 715 prepares bit-line 710 for data operations. For example, bit-line precharge circuitry 715 sets the bit-line to a predefined voltage level before any read or write operation is executed. For example, in a read operation, the precharging process ensures that the bit-line can accurately detect the subtle changes in voltage that represent the data stored in the memory cells.

Primary sense amplifier 720 amplifies the small voltage changes on bit-line 710, which are indicative of the binary data stored in the memory cells. For instance, when a '1' is stored in a memory cell, the corresponding change in voltage on bit-line 710, though faint, is detected and amplified by the sense amplifier, enabling the digital circuitry to recognize and process the data.

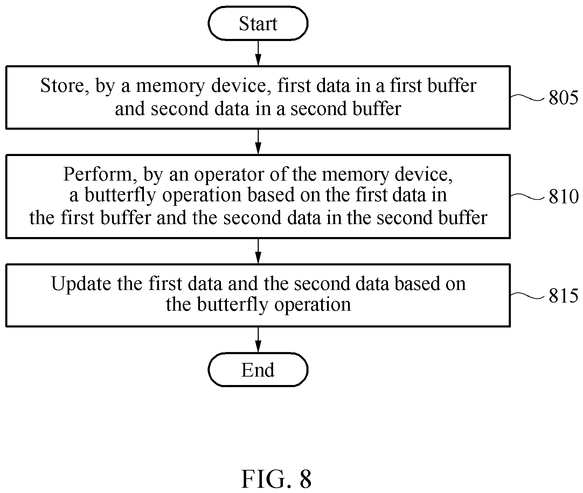

FIG. 8 illustrates an example of an operating method of a memory device.

In operation 805, the memory device stores data in designated buffers for processing. For instance, the first data set is placed in a first buffer, while the second set is allocated to a second buffer. This step ensures that each data set is positioned in a specific buffer for targeted processing.

In operation 810, the device's operator executes a butterfly operation. This process involves combining the first data from the first buffer with the second data from the second buffer. An example of this could be merging two data streams for a computation essential in signal processing or cryptographic algorithms.

Finally, in operation 815, there is an updating of the stored data based on the butterfly operation's result. The first and second data sets in their respective buffers are modified to reflect the outcomes of the processing. This could involve adjusting data values based on the computational output, ensuring the buffers contain the most current and processed data.

The examples described herein may be implemented by using a hardware component, a software component, and/or a combination thereof. A processing device may be implemented using one or more general-purpose or special-purpose computers, such as a processor, a controller and an arithmetic logic unit (ALU), a digital signal processor (DSP), a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing unit also may access, store, manipulate, process, and generate data in response to execution of the software. In some cases, the description of a processing unit is used as singular; however, one skilled in the art will appreciate that a processing unit may include multiple processing elements and multiple types of processing elements. For example, a processing device may include multiple processors or a processor and a controller. In addition, different processing configurations are possible, such as parallel processors.

The software may include a computer program, a piece of code, an instruction, or combinations thereof, to independently or uniformly instruct or configure the processing device to operate as desired. Software and data may be embodied permanently or temporarily a machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described embodiments. Additionally, these media may encompass data files, data structures, and similar elements, either as standalone items or in conjunction with program instructions. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs and/or DVDs; magneto-optical media such as optical discs; and hardware devices that are specially configured to store and perform program instructions, such as read-only memory (ROM), random-access memory (RAM), flash memory, and the like. Examples of program instructions include both machine code, such as produced by a compiler, and files containing higher-level code that may be executed by the computer using an interpreter.

A number of embodiments have been described above. Nevertheless, it should be understood that various modifications may be made to these embodiments. For example, effective outcomes can often be achieved by applying the described techniques in an alternative sequence, and/or if components in a described system, architecture, device, or circuit are combined in a different manner, or replaced or supplemented by other components or their equivalents.

The invention is specified by the scope of the following claims.

**Claims**

1. A memory device comprising:

    a memory cell array;

an operator comprising a logic circuit configured to perform an operation comprising a plurality of stages; and a plurality of buffers configured to store first data and second data corresponding to a plurality of operation commands received from a host for each of the plurality of stages, respectively,

wherein the operator comprises a butterfly unit configured to perform butterfly operations based on at least one of the first data and the second data.

2.  The memory device of claim 1, wherein, when the operator performs the operation comprising the plurality of stages, the plurality of buffers are configured to store input data and output data of the operation comprising the plurality of stages.

3.  The memory device of claim 1 or 2, wherein, when an operation of a corresponding stage is completed,

    a first buffer storing the first data updates the first data to a result of a first butterfly operation corresponding to the first data, and
    a second buffer storing the second data updates the second data to a result of a second butterfly operation corresponding to the second data.

4.  The memory device of one of claims 1 to 3, wherein the operation command comprises a first operation command and a second operation command,
    wherein the first operation command instructs an operation between pieces of data in a same buffer, and the second operation command instructs an operation between pieces of data in different buffers.

5.  The memory device of claim 4, wherein, when receiving the second operation command from the host, the first data is stored in a first buffer, and the second data is stored in a second buffer different from the first buffer, and, when an operation of a corresponding stage is completed, the first buffer updates the first data to a result of a butterfly operation corresponding to the first data, and the second buffer updates the second data to the result of the butterfly operation corresponding to the second data, or
    wherein, when receiving the first operation command from the host, the first data and the second data are stored in the second buffer, and, when the operation of the corresponding stage is completed, the second buffer updates the first data to a result of a butterfly operation corresponding to the first data, and the second buffer updates the second data to the result of the butterfly operation corresponding to the second data.

6.  The memory device of one of claims 1 to 5, wherein the operation comprising the plurality of stages comprises at least one of a number-theoretic transform, NTT, operation and a fast Fourier transform, FFT, operation, or

    wherein a size of the first data and a size of the second data are determined based on a size of each of the plurality of buffers, or
    further comprising a row buffer, wherein each of the plurality of buffers has a size smaller than a size of the row buffer.

7.  The memory device of one of claims 1 to 6, wherein the memory cell array comprises a memory cell array based on a plurality of dynamic random-access memories, DRAMs.

8.  A non-transitory computer-readable storage medium storing instructions that, when executed by a processor of a memory device comprising an operator, cause the processor to perform the method of

    receiving a plurality of commands from a host;
    determining a plurality of buffers in which first data and second data corresponding to the plurality of commands are stored among the plurality of buffers, respectively;
    storing the first data and the second data in the determined plurality of buffers; and performing butterfly operations based on at least one of the first data and the second data.

9.  The computer-readable storage medium of claim 8, wherein the storing comprises, when the operator performs an operation comprising a plurality of stages, the plurality of buffers storing at least one of input data and output data of the operation comprising the plurality of stages, or

    further comprising, when the operation of a corresponding stage is completed, a first buffer storing the first data updating the first data to a result of a first butterfly operation corresponding to the first data; and

a second buffer storing the second data updating the second data to a result of a second butterfly operation corresponding to the second data.

10. The computer-readable storage medium of claim 8 or 9, wherein the receiving the command from the host comprises receiving a first operation command and a second operation command,

wherein the first operation command instructs an operation between pieces of data in a same buffer, and the second operation command instructs an operation between pieces of data in different buffers,

wherein the receiving the command from the host comprises receiving the first operation command from the host, and the storing comprises storing the first data and the second data in the second buffer, and

wherein the operating method further comprises: when the operation of a corresponding stage is completed, the second buffer updating the first data to the result of a butterfly operation corresponding to the first data, and the second buffer updating the second data to a result of the butterfly operation corresponding to the second data.

11. The computer-readable storage medium of one of claims 8 to 10, wherein the receiving the command from the host comprises receiving the second operation command from the host, and the storing comprises storing the first data in a first buffer and storing the second data in a second buffer different from the first buffer, and

the operating method further comprises, when an operation of a corresponding stage is completed, the first buffer updating the first data to the result of a butterfly operation corresponding to the first data, and the second buffer updating the second data to a result of the butterfly operation corresponding to the second data.

12. The computer-readable storage medium of one of claims 8 to 11, wherein the operation comprising a plurality of stages comprises at least one of a number-theoretic transform, NTT, operation and a fast Fourier transform, FFT, operation, or

wherein a size of the first data and a size of the second data are determined based on a size of each of the plurality of buffers, or

wherein each of the memory device further comprises a row buffer, and the plurality of buffers has a size smaller than the size of the row buffer.

13. The computer-readable storage medium of one of claims 8 to 12, wherein the memory device comprises a memory cell array based on a plurality of dynamic random-access memories, DRAMs.

14. A method comprising:

storing, by a memory device, first data in a first buffer and second data in a second buffer;

performing, by an operator of the memory device, a butterfly operation based on the first data in the first buffer and the second data in the second buffer; and

updating the first data and the second data based on the butterfly operation.

15. The method of claim 14, further comprising computing a transformation operation comprising at least one of a number-theoretic transform, NTT, operation and a fast Fourier transform, FFT, operation based on a result of the butterfly operation, and

wherein computing the transformation operation comprises:

performing a first preliminary butterfly operation based on data in the first buffer during a first stage of the transformation operation; and

performing a second preliminary butterfly operation based on data in the second buffer during the first stage of the transformation operation, where the butterfly operation is performed during a second stage of the transformation operation.

110

Memory device
120

Memory bank
121
123

Operator

150

160

Host memory controller

Host processor

FIG. 1

210

X[0] ◯ ◯ ◯ ◯ ◯ X[0]
X[4] ◯ ◯ w⁰ ◯ ◯ ◯ ◯ X[1]
X[2] ◯ ◯ ◯ ◯ w⁰ ◯ ◯ X[2]
X[6] ◯ ◯ w⁰ ◯ ◯ w² ◯ ◯ X[3]

X[1] ◯ ◯ ◯ ◯ ◯ ◯ w⁰ X[4]
X[5] ◯ ◯ w⁰ ◯ ◯ ◯ ◯ w¹ X[5]
X[3] ◯ ◯ ◯ ◯ w⁰ ◯ ◯ w² X[6]
X[7] ◯ ◯ w⁰ ◯ ◯ w² ◯ ◯ w³ X[7]

220

◯ ⊕
◯ ⊘ ⊠

FIG. 2

Inter
bank
data
bus

Memory cell array — 310

Row buffer — 320

Selector — 330

— 340      — 350

Operator — 360

FIG. 3A

340

350

360

| LSU | 365

| LSU | 365

361 | TFG | | BU | 363

FIG. 3B

FIG. 4

FIG. 5

```
                    ╭─────────────╮
                    │    Start    │
                    ╰──────┬──────╯
                           │
                           ▼
        ┌──────────────────────────────────────────┐
        │          Receive command from host        │ ~ 610
        └──────────────────────┬───────────────────┘
                               │
                               ▼
        ┌──────────────────────────────────────────┐
        │      Determine buffer in which first data and       │
        │          second data corresponding to          │ ~ 620
        │     command are stored among plurality of buffers    │
        └──────────────────────┬───────────────────┘
                               │
                               ▼
        ┌──────────────────────────────────────────┐
        │  Store first data and second data in determined buffer  │ ~ 630
        └──────────────────────┬───────────────────┘
                               │
                               ▼
        ┌──────────────────────────────────────────┐
        │         Perform butterfly operation based on        │ ~ 640
        │       at least one of first data and second data      │
        └──────────────────────┬───────────────────┘
                               │
                               ▼
                    ╭─────────────╮
                    │     End     │
                    ╰─────────────╯
```

FIG. 6

FIG. 7

```
        ( Start )
            │
            ▼
┌──────────────────────────────────────────┐
│ Store, by a memory device, first data in  │        ╮
│ a first buffer and second data in a       │─────── 805
│ second buffer                             │        ╯
└──────────────────────────────────────────┘
            │
            ▼
┌──────────────────────────────────────────┐
│ Perform, by an operator of the memory     │        ╮
│ device, a butterfly operation based on    │─────── 810
│ the first data in the first buffer and    │        ╯
│ the second data in the second buffer      │
└──────────────────────────────────────────┘
            │
            ▼
┌──────────────────────────────────────────┐
│ Update the first data and the second data │        ╮
│ based on the butterfly operation          │─────── 815
└──────────────────────────────────────────┘
            │
            ▼
        ( End )
```

FIG. 8

Europäisches
Patentamt

European
Patent Office

Office européen
des brevets

# EUROPEAN SEARCH REPORT

**Application Number**

EP 24 19 5903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PARK JAEWOO ET AL: "NTT-PIM: Row-Centric Architecture and Mapping for Efficient Number-Theoretic Transform on PIM", 2023 60TH ACM/IEEE DESIGN AUTOMATION CONFERENCE (DAC), IEEE, 9 July 2023 (2023-07-09), pages 1-6, XP034423195, DOI: 10.1109/DAC56929.2023.10247747 [retrieved on 2023-09-15] * section III-V; figures 2-6 * | 1-15 | INV. H04L9/30 |
| A | MU JIANAN ET AL: "Scalable and Conflict-Free NTT Hardware Accelerator Design: Methodology, Proof, and Implementation", IEEE TRANSACTIONS ON COMPUTER-AIDED DESIGN OF INTEGRATED CIRCUITS AND SYSTEMS, IEEE, USA, vol. 42, no. 5, 8 September 2022 (2022-09-08), pages 1504-1517, XP011939120, ISSN: 0278-0070, DOI: 10.1109/TCAD.2022.3205552 [retrieved on 2022-09-09] * section III; figure 2 * | 1-15 | |
| A | DAI LI ET AL: "MeNTT: A Compact and Efficient Processing-in-Memory Number Theoretic Transform (NTT) Accelerator", ARXIV.ORG, CORNELL UNIVERSITY LIBRARY, 201 OLIN LIBRARY CORNELL UNIVERSITY ITHACA, NY 14853, 17 February 2022 (2022-02-17), XP091161276, * section III; figure 4 * | 1-15 | |

TECHNICAL FIELDS
SEARCHED (IPC)

H04L

The present search report has been drawn up for all claims

| Place of search | Date of completion of the search | Examiner |
|---|---|---|
| Munich | 9 January 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)